# EUROPÄISCHE PATENTANMELDUNG

(11) **EP 1 004 398 A2**
(43) Veröffentlichungstag der Anmeldung: **31.05.2000**
(21) Anmeldenummer: 99121206.9
(22) Anmeldetag: 23.10.1999
(51) Int. Cl.: B24B 7/18, B24B 55/03

(54) **Mobiles Wasserreinigungsgerät**

(30) Priorität: 23.11.1998 DE 29820895 U
(71) Anmelder: ECS Eich Maschinenbau GmbH, 35764 Sinn (DE)
(72) Erfinder: Matthias Eich, 35745 Herborn (DE)
(74) Vertreter: Knefel, Cordula, Dipl.-Phys.

(57) **Zusammenfassung**

Mobiles Wasserreinigungsgerät, bei dem ein Raum (2) für das zu reinigende Wasser (3) vorgesehen ist, sowie eine wenigstens einen Strömungskanal ausbildende Reinigungseinheit (7). Der wenigstens eine Strömungskanal ist geneigt zur Senkrechten angeordnet. Das zu reinigende Wasser (3) wird in dem wenigstens einen Strömungskanal von unten nach oben geführt. Hierbei setzen sich Schmutzpartikel des zu reinigenden Wassers nach unten ab, und das gereinigte Wasser tritt oben aus der Reinigungseinheit (7) aus.

## Beschreibung

Die Erfindung betrifft ein mobiles Wasserreinigungsgerät.

Gemäß dem Stand der Technik werden derartige mobile Wasserreinigungsgeräte beispielsweise im Zusammenhang mit Bodenschleifmaschinen eingesetzt, um beispielsweise Granitböden, die großflächig verlegt sind, abzuschleifen. Eine andere Anwendung ist das Bearbeiten von Gußasphalt, der in Innenräumen als Estrich aufgebracht und anschließend abgeschliffen wird.

Diese Schleifarbeiten wurden bisher hauptsächlich trocken durchgeführt. Hierdurch ist eine lange Bearbeitungszeit erforderlich. Darüber hinaus ist die Staubentwicklung sehr groß.

Gemäß dem Stand der Technik werden auch Naßsauger eingesetzt, die aber den Nachteil aufweisen, daß zwar das Wasser mit den abgeschliffenen Partikeln aufgesaugt wird. Das Wasser muß aber ständig aus dein Naßsauger entfernt werden. Der Naßsauger wird hierzu ständig geleert. Es ist für ein effektives Arbeiten hierbei erforderlich, daß zwei Personen vorhanden sind, wobei eine Person schleift und saugt, während die andere Person ständig den Naßsauger entleert.

Das der Erfindung zugrunde liegende technische Problem besteht darin, ein mobiles Wasserreinigungsgerät anzugeben, welches Wasser hauptsächlich in einem Kreislauf reinigt, derart, daß der Schlamm aus abgeschiedenen Partikeln von Zeit zu Zeit entsorgt wird, das Wasser aber im wesentlichen immer wieder zum Reinigen verwendet wird.

Dieses technische Problem wird durch die Merkmale der Vorrichtung gemäß dein Anspruch 1 gelöst.

Dadurch, daß das erfindungsgemäße Wasserreinigungsgerät einen Raum für das zu reinigende Wasser aufweist, daß darüber hinaus eine Reinigungseinheit vorgesehen ist, wobei in der Reinigungseinheit Strömungskanäle ausgebildet sind, die geneigt zur Senkrechten angeordnet sind, und dadurch, daß das zu reinigende Wasser von unten nach oben durch die Strömungskanäle geführt wird, sinken die Schmutzpartikel nach unten ab, während das Wasser in gereinigter Form oben aus den Strömungskanälen austritt. Das Wasser wird anschließend in einem Auffangraum gesammelt. Mittels einer Pumpe wird das gereinigte Wasser wieder dem Reinigungs- und/oder Produktionsvorgang zugeführt.

Die erfindungsgemäße Vorrichtung hat den Vorteil, daß der Schlamm, der aus den Schmutzpartikeln besteht, gesammelt und beispielsweise einer Sackstation zugeführt wird. Dieser Schlamm kann von Zeit zu Zeit entsorgt werden. Das Wasser wird in einem Kreislauf immer wieder zur Reinigung verwendet. Je nach Bedarf kann noch frisches Wasser zugeführt werden.

Die Sackstation ist vorteilhaft lösbar an dem erfindungsgemäßen Wasserreinigungsgerät angeordnet, um immer wieder ausgetauscht werden zu können. Hierdurch wird die Arbeit mit dem Schleif- oder Reinigungsgerät, an dem das erfindungsgemäße Wasserreinigungsgerät angeordnet ist, nicht gestört. Die Sackstation kann auch unabhängig von der erfindungsgemäßen Vorrichtung ausgebildet und über Schläuche mit der Vorrichtung verbunden sein.

Erfindungsgemäß ist eine Pumpe zur Erzeugung eines Unterdruckes in dem Wasserreinigungsgerät vorgesehen, damit das zu reinigende Wasser sich in dem Wasserreinigungsgerät, insbesondere in dem Raum für das zu reinigende Wasser, sammelt.

Die Reinigungseinheit besteht aus einer Vielzahl von Rohren. Es kann aber auch nur ein Rohr vorgesehen sein. Die Rohre sind vorteilhaft im Querschnitt sechseckig ausgebildet. Es ist aber auch jeder andere Querschnitt möglich. Bei der sechseckigen Ausbildung des Querschnittes sind die Rohre derart angeordnet, daß ein wabenförmiger Querschnitt entsteht. Es ist auch möglich, anstelle der Rohre im wesentlichen parallel zueinander angeordnete Bleche vorzusehen, die plan- oder wellenförmig ausgebildet sein können.

Die Rohre sind, ebenso wie die Bleche, geneigt zur Senkrechten angeordnet, beispielsweise mit einer Neigung zwischen 50° und 70°. Es ist aber auch ein anderer Neigungswinkel möglich. Der Neigungswinkel hängt von den abzuscheidenden Feststoffen ab. Soll Glas abgetrennt werden, sind die Rohre oder die Bleche flacher anzuordnen, damit das Glas besser nach unten absinkt. Bei anderen Stoffen, beispielsweise Beton oder Bitumen, werden die Rohre oder die Bleche steiler angeordnet.

Vorteilhaft ist die Neigung der Reinigungseinheit variabel einstellbar, um das Wasserreinigungsgerät an verschiedenen Einsatzgeräten, wie Fassadenreinigungsgeräten, Bodenschleifmaschinen oder dergleichen einzusetzen.

Es ist auch möglich, die Reinigungseinheit austauschbar zu gestalten. Hierdurch ist es möglich, die jeweilige Reinigungseinheit je nach Anwendung zu wählen, wobei sowohl die Neigung der Rohre oder der Bleche variiert werden kann als auch die Länge der Rohre und der Strömungskanäle.

Nach dem Reinigen des Wassers wird dieses in einem Auffangraum gesammelt. Der Auffangraum weist vorteilhaft einen Wasserstandsanzeiger und/oder Schalter für einen Mindestwasserstand auf. Wird dieser Wasserpegel unterschritten, schaltet der Schalter die Pumpe ab, die das gereinigte Wasser wieder dem Reinigungskreislauf zuführt, damit die Pumpe nicht trockenläuft.

Zum Transport des Gerätes wird der Auffangraum für das gereinigte Wasser nach Möglichkeit entleert. Das Ende der Entleerung wird ebenfalls über diesen Schalter geregelt.

Vorzugsweise ist darüber hinaus ein Wasserstandsanzeiger und/oder Schalter vorgesehen, der einen Wasserhöchststand anzeigt. Dieser Schalter ist unterhalb der Oberkante der Reinigungseinheit angeordnet, so daß das gereinigte Wasser immer die Möglichkeit hat, aus der Reinigungseinheit in den Auffangraum zu fließen.

Zusätzlich ist erfindungsgemäß noch ein weiterer Wasserstandsanzeiger und/oder Schalter vorgesehen, der oberhalb der Oberkante der Reinigungseinheit angeordnet ist. Es handelt sich hierbei um einen Notschalter, der das gesamte Gerät abschaltet, falls der Wasserstand in dem Gerät zu hoch wird, um eine Beschädigung der Gerätes, insbesondere der elektrischen oder elektronischen Teile des Gerätes, zu vermeiden.

Vorteilhaft ist in dem Wasserreinigungsgerät eine Flockungsmittel-Zugabevorrichtung vorgesehen. Diese Flockungsmittelstation kann in der Zuführleitung des Schmutzwassers ein Flockungsmittel zudosieren, damit eine Ausflockung der Schmutzpartikel stattfindet, wodurch eine Abscheidung entweder überhaupt ermöglicht oder erleichtert wird.

Das Flockungsmittel kann auch in dem Raum für das zu reinigende Wasser zugegeben werden. Hier muß dann für eine Durchmischung gesorgt werden.

Das erfindungsgemäße Wasserreinigungsgerät kann in einer vergrößerten Version mehrere Wasserauffangräume für Schmutzwasser und/oder mehrere Wasserreinigungseinheiten aufweisen. Die Reinigungseinheiten sind vorteilhaft einzeln betätigbar ausgebildet. Dies hat den Vorteil, daß bei drei oder vier Räumen nebeneinander mehrere Bedienpersonen gleichzeitig mit einem Gerät arbeiten können, ohne daß drei einzelne Geräte vorhanden sein müssen. Durch diesen Aufbau wird das Gerät auch günstiger als drei einzelne Geräte.

Das Wasserreinigungsgerät kann als mobiles Wasserreinigungsgerät mit Rollen ausgestattet sein. Es kann aber auch größer ausgebildet und beispielsweise auf einem Anhänger eines Fahrzeuges fest installiert sein.

Das erfindungsgemäße Wasserreinigungsgerät kann, wie schon ausgeführt, bei Bodenreinigungsmaschinen, Bodenschleifmaschinen, Fassadenreinigungsmaschinen oder dergleichen eingesetzt werden. Bei den Stoffen, die abgeschieden werden können, handelt es sich um Beton, Bitumen, Gußasphalt, Granit, Marmor, alle Gesteinsarten, Keramik, Ton, Porzellan, Glas oder dergleichen.

In einem weiteren Ausführungsbeispiel der Erfindung ist die Pumpe oder der Motor zum Anpumpen des zu reinigenden Wassers in einem externen Gerät angeordnet. In diesem externen Gerät wird der Unterdruck erzeugt, so daß das Schmutzwasser angesaugt wird. Das Schmutzwasser wird anschließend über eine Pumpe dem Wasserreinigungsgerät zu geführt. Dies hat den Vorteil, daß das Schmutzwasser vor Ort mit einem kleinen handlichen Gerät angesaugt werden kann und daß das Gerät zum Reinigen des Wassers beispielsweise auf einem Lastkraftwagen oder dergleichen bleiben kann und nicht gesondert hin- und hertransportiert werden muß.

Die erfindungsgemäße Vorrichtung kann eine Reinigungseinheit aufweisen, in deren Mitte ein Kanal und/oder ein Rohr für die Zuführung des zu reinigenden Wassers vorgesehen ist. Durch dieses Rohr und/oder den Kanal wird das zu reinigende Wasser in einen unteren Raum geleitet. Von dem unteren Raum wird das Wasser nach oben durch die schräg angeordnete Reinigungseinheit gedrückt.

Diese Anordnung hat den Vorteil, daß durch die mittige Wasserzuführung der Schmutz eine Bewegungsrichtung nach unten aufweist und sich somit leichter absetzt. Darüber hinaus werden die Lamellen der Reinigungseinheit gleichmäßig beansprucht. Durch diese Maßnahmen wird eine gleichmäßigere Reinigung des Wassers erzielt.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: eine erfindungsgemäße Vorrichtung im Längsschnitt;
- Fig. 2: eine erfindungsgemäße Vorrichtung im Querschnitt;
- Fig. 3: eine Reinigungseinheit im Querschnitt;
- Fig. 4: eine geänderte Reinigungseinheit im Querschnitt;
- Fig. 5: ein geändertes Ausführungsbeispiel im Längsschnitt.
- Fig. 6: das geänderte Ausführungsbeispiel der Fig. 5 im Querschnitt;
- Fig. 7: eine Reinigungseinheit mit Rohr im Querschnitt;
- Fig. 8: ein geändertes Ausführungsbeispiel einer Reinigungseinheit mit Rohr im Querschnitt;
- Fig. 9: ein geändertes Ausführungsbeispiel einer Reinigungseinheit im Querschnitt.

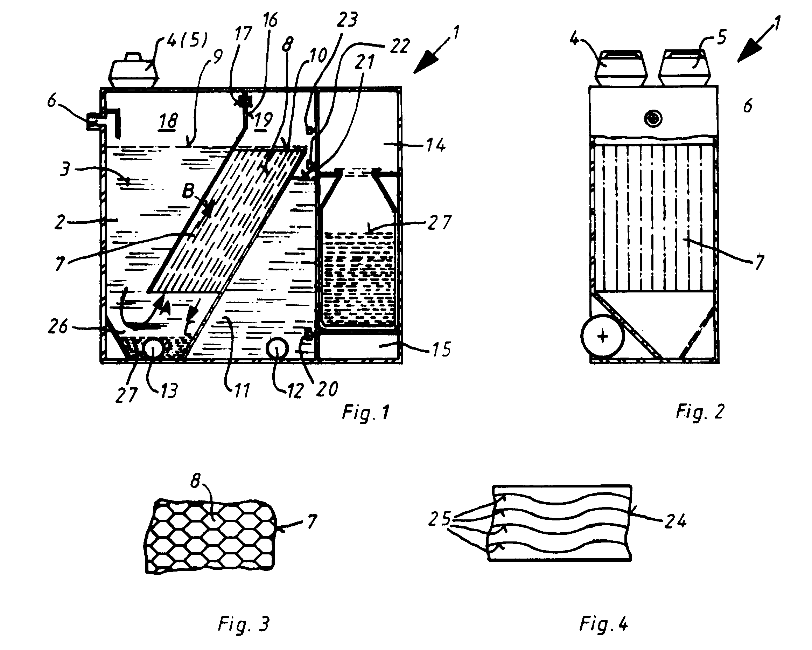

Fig. 1 zeigt eine Vorrichtung (1) mit einem Raum (2), in dem sich zu reinigendes Wasser (3) sammelt. Das Wasser (3) wird mittels Pumpen (4, 5) oder Motoren, die einen Unterdruck erzeugen, in den Raum (3) durch eine Zuführöffnung (6) gepumpt.

Das zu reinigende Wasser (3) wird in Richtung der Pfeile (A, B) durch eine Reinigungseinheit (7) mit einem Rohrsystem (8) gedrückt, sobald ein Wasserpegel (9) in dem Raum (3) über eine Oberkante (10) der Reinigungseinheit (7) steigt, da durch den erhöhten Wasserpegel (9) ein höherer Druck vorhanden ist. Das Rohrsystem (8) ist schräg angeordnet, derart, daß die Schmutzpartikel des zu reinigenden Wassers auf den Schrägflächen des Rohrsystems (8) nach unten in Richtung des Pfeiles (C) absinken.

Das gereinigte Wasser wird in einem Auffangraum (11) gesammelt. Von dort wird es mittels einer Pumpe (12) dem Reinigungskreislauf wieder zugeführt.

Die abgesunkenen Schmutzpartikel sammeln sich als Schlamm (27) in einem Schlammraum (26) und werden mittels einer Pumpe (13) in eine Sackstation (14) gepumpt. Dort wird der Schlamm (27) gesammelt. Das dort abtropfende Wasser wird in einer Auffangwanne (15) gesammelt und kann in den Raum (3) rückgeführt werden.

Im oberen Bereich der Vorrichtung (1) ist eine Trennwand (16) vorgesehen mit einer Öffnung (17), um einen Druckausgleich zwischen den Räumen (18, 19) zu erhalten. Hierdurch wird gewährleistet, daß das Wasser wegen des höheren Wasserpegels (9) und des daraus resultierenden höheren Druckes in dem Raum (3) im Vergleich zu dem Wasserpegel (21) in dem Raum (11) durch das Rohrsystem (8) in den Raum (11) gelangt.

In dem Raum (11) ist eine Füllstandsüberwachung vorgesehen.

In dem Auffangraum (11) ist ein Schalter (20) vorgesehen. Sinkt ein Wasserpegel (20) des gereinigten Wassers unter die Höhe des Schalters (20) ab, wird die Pumpe (12) abgeschaltet, damit die Pumpe (12) nicht trockenläuft.

Zum Transport des Gerätes wird die Kammer (11) soweit wie möglich entleert. Das Ende der Entleerung wird ebenfalls über den Schalter (20) geregelt.

Um die Vorrichtung (1) wieder in Betrieb zu nehmen, ist die Kammer (11) mit Wasser zu füllen, da sonst die Pumpe (12) nicht läuft. Hierfür ist ein weiterer Schalter (22) vorgesehen, der signalisiert, daß die erforderliche Wasserhöhe erreicht ist.

Ein weiterer Schalter (23) ist als Notschalter ausgebildet, der die gesamte Vorrichtung (1) abschaltet. Steigt der Wasserpegel (21) über den Stand des Schalters (23), ist eine Totalabschaltung notwendig, da ansonsten die Pumpen (4, 5) Wasser ansaugen würden und hierbei zu Schaden kommen.

Nach einer Notabschaltung ist die Pumpe (12) nur noch per Hand zu betätigen, um den Raum (11) zu entleeren.

Mit der erfindungsgemäßen Vorrichtung (1) ist es möglich, über sehr lange Schläuche (nicht dargestellt) zu reinigendes Wasser anzusaugen. Die Schläuche können beispielsweise 50 Meter lang und länger sein.

Gemäß Fig. 3 weist das Rohrsystem (8) der Reinigungseinheit (7) einen wabenförmigen Aufbau auf. Die einzelnen Rohre sind im Querschnitt sechseckig ausgebildet.

Gemäß Fig. 4 sind in einer Reinigungseinheit (24) im wesentlichen parallel zueinander angeordnete Bleche (25) vorgesehen. Die Bleche (25) sind als Wellbleche ausgebildet. Sie können auch versetzt zueinander angeordnet sein.

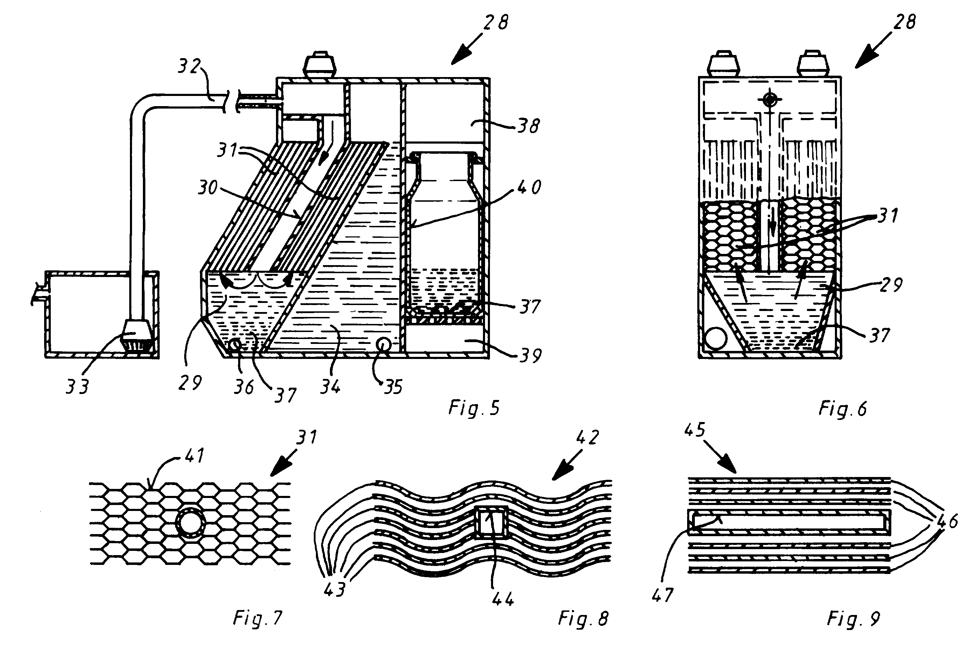

Fig. 5 und Fig. 6 zeigen eine Reinigungseinheit (28) mit einem Raum (29) für das zu reinigende Wasser. Das zu reinigende Wasser wird über ein Rohr (30) in den Raum (29) geleitet. Das Rohr (30) ist mittig in der Reinigungseinheit (31) angeordnet. Die Zuleitung des Wassers erfolgt über einen Schlauch (32), der mit einer externen Pumpe (33) verbunden ist.

Dadurch, daß das zu reinigende Wasser durch das Rohr (30) mittig durch die Reinigungseinheit (31) geführt wird, werden die Lamellen der Reinigungseinheit (31) beim Reinigen gleichermaßen beansprucht. Das gereinigte Wasser fließt in einen Raum (34). Von dort wird es über eine Pumpe (35) dem Kreislauf wieder zugeführt.

Eine Pumpe (36) pumpt abgesetzten Schlamm (37) in eine Sackstation (38). Dort wird der Schlamm (37) gesammelt. Es ist wiederum eine Auffangwanne (39) für abtropfendes Wasser vorgesehen. Der Schlamm (37) wird in einem Sack (40) gesammelt.

Das zu reinigende Wasser wird von der Pumpe (33) angesaugt und über den Schlauch (32) zu der Vorrichtung (28) gepumpt. Dies hat den Vorteil, daß die relativ handliche Pumpe (33) vor Ort eingesetzt werden kann, während die Vorrichtung (28) beispielsweise auf einem LKW (nicht dargestellt) bleibt. Die Pumpe (33) ist als Tauchpumpe ausgebildet.

Fig. 7 zeigt ein Rohrsystem (41) der Reinigungseinheit (31). In dem Rohrsystem (41) ist das Rohr (30) mittig angeordnet.

Fig. 8 zeigt das Rohrsystem (42) mit im Wesentlichen zueinander parallel angeordneten Blechen (43). Die Bleche (43) sind als Wellbleche ausgebildet. In der Mitte des Reinigungssystems (42) ist ein Rohr (44) angeordnet.

Fig. 9 zeigt eine Reinigungseinheit (45) mit planparallel angeordneten Blechen (46). Zwischen den planparallelen Blechen (46) ist ein Rohr (47) vorgesehen.

### Bezugszahlen

- 1: Vorrichtung
- 2: Raum
- 3: Wasser
- 4: Pumpe
- 5: Pumpe
- 6: Zuführöffnung
- 7: Reinigungseinheit
- 8: Rohrsystem
- 9: Wasserpegel
- 10: Oberkante
- 11: Auffangraum
- 12: Pumpe
- 13: Pumpe
- 14: Sackstation
- 15: Wanne
- 16: Trennwand
- 17: Öffnung
- 18: Raum
- 19: Raum
- 20: Schalter
- 21: Wasserpegel
- 22: Schalter
- 23: Schalter
- 24: Reinigungseinheit
- 25: Bleche
- 26: Schlammraum
- 27: Schlamm
- 28: Vorrichtung
- 29: Raum
- 30: Rohr
- 31: Reinigungseinheit mit Lamellen
- 32: Schlauch
- 33: Pumpe
- 34: gereinigtes Wasser
- 35: Pumpe
- 36: Pumpe
- 37: Schlamm
- 38: Sackstation
- 39: Auffangbehälter für abtropfendes Wasser
- 40: Sack
- 41: Rohrsystem
- 42: weitere Reinigungseinheit
- 43: Bleche
- 44: Rohr
- 45: Reinigungseinheit
- 46: planparallele Bleche
- 47: Rohr
- A, B, C: Pfeile

## Patentansprüche

1. Mobiles Wasserreinigungsgerät,
**dadurch gekennzeichnet,**
- daß ein Raum (3) für das zu reinigende Wasser vorgesehen ist,
- daß eine wenigstens einen Strömungskanal ausbildende Reinigungseinheit (7) vorgesehen ist,
- daß der wenigstens eine Strömungskanal geneigt zur Senkrechten angeordnet ist, und
- daß der wenigstens eine Strömungskanal als ein das zu reinigende Wasser von unten nach oben führender Kanal ausgebildet ist.

2. Wasserreinigungsgerät nach Anspruch 1, dadurch gekennzeichnet, daß wenigstens eine Pumpe (4, 5) und/oder Motor zur Erzeugung eines Unterdruckes in dem Raum (3) für das zu reinigende Wasser vorgesehen sind.

3. Wasserreinigungsgerät nach Anspruch 1, dadurch gekennzeichnet, daß ein Schlammraum (26) vorgesehen ist.

4. Wasserreinigungsgerät nach Anspruch 1, dadurch gekennzeichnet, daß eine Schlamm (27) aus dem Schlammraum (26) befördernde Pumpe (13) vorgesehen ist.

5. Wasserreinigungsgerät nach Anspruch 1, dadurch gekennzeichnet, daß eine Schlammaufnahmestation (14) für den Schlamm (27) lösbar an dem Wasserreinigungsgerät (1) angeordnet ist.

6. Wasserreinigungsgerät nach Anspruch 1, dadurch gekennzeichnet, daß die Reinigungseinheit (7) aus einer Vielzahl von Rohren (8) besteht.

7. Wasserreinigungsgerät nach Anspruch 1, dadurch gekennzeichnet, daß die Reinigungseinheit (7) aus einem Rohr besteht.

8. Wasserreinigungsgerät nach Anspruch 6 oder 7, dadurch gekennzeichnet, daß das wenigstens eine Rohr im Querschnitt sechseckig ausgebildet ist.

9. Wasserreinigungsgerät nach Anspruch 8, dadurch gekennzeichnet, daß mehrere Rohre (8) derart angeordnet sind, daß ein wabenförmiger Querschnitt ausgebildet ist.

10. Wasserreinigungsgerät nach Anspruch 1, dadurch gekennzeichnet, daß die den wenigstens einen Strömungskanal ausbildende Reinigungseinheit (7) wenigstens zwei, wenigstens annähernd parallel zueinander angeordnete Bleche (25) aufweist, wobei die Bleche (25) mit ihrer Fläche geneigt zur Senkrechten angeordnet sind.

11. Wasserreinigungsgerät nach Anspruch 10, dadurch gekennzeichnet, daß die Bleche (25) als Wellbleche ausgebildet sind.

12. Wasserreinigungsgerät nach Anspruch 1, dadurch gekennzeichnet, daß der wenigstens eine Strömungskanal der Reinigungseinheit (7) mit einem Neigungswinkel zwischen 50° und 70° angeordnet ist.

13. Wasserreinigungsgerät nach Anspruch 1, dadurch gekennzeichnet, daß die Neigung des wenigstens einen Strömungskanals der Reinigungseinheit (7) variabel einstellbar ist.

14. Wasserreinigungsgerät nach Anspruch 1, dadurch gekennzeichnet, daß die Reinigungseinheit (7) austauschbar ausgebildet ist.

15. Wasserreinigungsgerät nach Anspruch 14, dadurch gekennzeichnet, daß die Strömungskanäle der austauschbaren Reinigungseinheiten (7) unterschiedliche Längen aufweisen.

16. Wasserreinigungsgerät nach Anspruch 1, dadurch gekennzeichnet, daß ein Auffangraum (11) für das gereinigte Wasser vorgesehen ist.

17. Wasserreinigungsgerät nach Anspruch 16, dadurch gekennzeichnet, daß in dem Auffangraum (11) im unteren Bereich ein Wasserstandsanzeiger und/oder Schalter (20) für einen Mindestwasserstand vorgesehen ist.

18. Wasserreinigungsgerät nach Anspruch 16, dadurch gekennzeichnet, daß im oberen Bereich des Auffangraumes (11) ein Wasserstandsanzeiger und/oder Schalter (22) für einen Höchstwasserstand vorgesehen ist, wobei der Wasserstandsanzeiger und/oder Schalter (22) unterhalb einer Oberkante (10) der Reinigungseinheit (7) angeordnet ist.

19. Wasserreinigungsgerät nach Anspruch 1, dadurch gekennzeichnet, daß ein Notschalter (23) oberhalb der Oberkante (10) der Reinigungseinheit (7) vorgesehen ist.

20. Wasserreinigungsgerät nach Anspruch 1, dadurch gekennzeichnet, daß eine Flockungsmittel-Zugabevorrichtung vorgesehen ist.

21. Wasserreinigungsgerät nach Anspruch 1, dadurch gekennzeichnet, daß das Wasserreinigungsgerät (1) mehrere Einheiten mit wenigstens einem Wasserauffangraum und/oder mit mehreren Reinigungseinheiten aufweist.

22. Wasserreinigungsgerät nach Anspruch 21, dadurch gekennzeichnet, daß die Einheiten des Wasserreinigungsgerätes (1) einzeln betätigbar ausgebildet sind.

23. Wasserreinigungsgerät nach Anspruch 2, dadurch gekennzeichnet, daß die wenigstens eine Pumpe (33) oder der Motor zur Erzeugung eines Unterdruckes in einem Raum für das zu reinigende Wasser in einem externen Gerät angeordnet ist.

24. Wasserreinigungsgerät nach Anspruch 1, dadurch gekennzeichnet, daß in der den wenigstens einen Strömungskanal ausbildenden Reinigungseinheit (31) ein zusätzlicher Kanal und/oder ein zusätzliches Rohr (30) für die Zuführung des zu reinigenden Wassers vorgesehen ist.

25. Wasserreinigungsgerät nach Anspruch 24, dadurch gekennzeichnet, daß der zusätzliche Kanal und/oder das zusätzliche Rohr (30) mittig in der Reinigungseinheit (31) angeordnet ist.
